(19) **Europäisches Patentamt / European Patent Office / Office européen des brevets**

(11) **EP 4 064 071 A1**

(12) **EUROPEAN PATENT APPLICATION**
published in accordance with Art. 153(4) EPC

(43) Date of publication:
**28.09.2022 Bulletin 2022/39**

(51) International Patent Classification (IPC):
**G06F 16/33** (2019.01)      **G06F 16/36** (2019.01)

(21) Application number: **20889365.1**

(86) International application number:
**PCT/CN2020/130195**

(22) Date of filing: **19.11.2020**

(87) International publication number:
**WO 2021/098794 (27.05.2021 Gazette 2021/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.11.2019 CN 201911148419**

(71) Applicant: **Kwong, Chun Wai Michael Shatin, N.T. Hong Kong 999077 (CN)**

(72) Inventors:
• **FUNG, Wai Tong**
  **Hong Kong Science Park, Shatin, N.T. Hong Kong 999077 (CN)**
• **KWONG, Chun Wai Michael**
  **Hong Kong Science Park, Shatin, N.T. Hong Kong 999077 (CN)**

(74) Representative: **Gislon, Gabriele**
**Marietti, Gislon e Trupiano S.r.l.**
**Via Larga, 16**
**20122 Milano (IT)**

(54) **TEXT SEARCH METHOD, DEVICE, SERVER, AND STORAGE MEDIUM**

(57)    A text search method, a text search device, a server and a storage medium are provided, relating to the field of information processing technology. The method acquires a target text matrix formed by a plurality of target word vectors associated with an input text according to a target database by preconfiguring a target database including a plurality of word vectors, a plurality of to-be-matched texts and a subject graph corresponding to each of the to-be-matched texts; then uses that target text matrix to construct a target subject graph corresponding to the input text; acquires in the target database a plurality of the initially matching texts corresponding to the input text and a subject graph corresponding to each of the initially matching texts; then generates a search result of the input text according to the target subject graph and the subject graph corresponding to each of the initially matching texts. The method can search the to-be-matched texts whose meanings are similar to the input text when performing a text search, thereby increasing text search accuracy.

Constructing a target database

Acquiring all keywords in all to-be-matched texts — 211

Acquiring the word vectors associated with each of the keywords according to a term frequency inverse document frequency at which each of the keywords appears in each of the to-be-matched texts — 213

Constructing the subject graph corresponding to each of the to-be-matched texts according to the respective word vectors associated with all the keywords included in each of the to-be-matched texts, so that all the word vectors associated with all of the keywords correspond and all the subject graphs corresponding to the to-be-matched texts together constitute the target database — 215

Performing text search

Acquiring a target text matrix corresponding to an input text in the target database — 231

Constructing a target subject graph corresponding to the input text according to the target text matrix — 233

Determining in the target database a plurality of initially matching texts corresponding to the input text and a subject graph corresponding to each of the initially matching texts — 235

Generating a search result of the input text according to the target subject graph and the subject graph corresponding to each of the initially matching texts — 237

Fig. 10

**Description**

**Cross-reference to Related Application**

This application claims benefit of the Chinese Patent Application with the application no. 201911148419.0 and the title "TEXT SEARCH METHOD, DEVICE, SERVER AND STORAGE MEDIUM" filed on 21 November 2019, which is hereby incorporated by reference herein in its entirety.

**Field of the Invention**

The invention relates to the field of information processing technology, and in particular provides a text search method, a text search device, a server and a storage medium.

**Background of the Invention**

Text search technology can perform information search according to textual content input by the user, such as keywords, semantics etc. so as to feed back to the user a matching text.

In text search solutions known in the prior art, in general, an analysis of keywords input by a user is performed to calculate a score for each text according to the frequency at which the input keyword appears in the corresponding text in the database, and then to sort by score in descending order the matching texts in the database with the input keywords; or the text input by a user is converted into a vector based on a vector space model and the vector is calculated for its score in combination with the respective vectors associated with all the texts stored in the database to sort the texts by score in order.

However, the text search solutions as mentioned above are based on a comparison between keywords or words in a text input by the user and text words stored in the database, without searching for words which are literally different but semantically similar, leading to a text search result of lower accuracy.

**Summary of the Invention**

The object of the invention is to provide a text search method, a text search device, a server and a storage medium to increase text search accuracy.

To achieve at least one of the above objects, the present application provides a technical solution as follows: In an embodiment, the present invention provides a text search method comprising:

acquiring in a target database a target text matrix corresponding to an input text; wherein the target database comprises a plurality of word vectors associated with each word, and the target text matrix is formed by a plurality of target word vectors corresponding to the input text in the target database;

constructing a target subject graph corresponding to the input text according to the target text matrix;

determining in the target database a plurality of initially matching texts corresponding to the input text and a subject graph corresponding to each of the initially matching texts; wherein a plurality of to-be-matched texts and a subject graph corresponding to each of the to-be-matched texts are stored in the target database, and each of the initially matching texts being selected from the plurality of to-be-matched texts;

generating a search result of the input text according to the target subject graph and the subject graph corresponding to each of the initially matching texts.

Optionally, in a possible embodiment, the step of generating a search result of the input text according to the target subject graph and the subject graph corresponding to each of the initially matching texts comprises:

calculating a graph similarity between the subject graph corresponding to each of the initially matching texts and the target subject graph to yield an image difference score for each of the initially matching texts;

generating the search result of the input text corresponds according to the image difference score corresponding to each of the initially matching texts.

Optionally, in a possible embodiment, the step of constructing a target subject graph corresponding to the input text according to the target text matrix comprises:

constructing a coordinate graph according to first-type data present in the target text matrix;

filling a coordinate point with second-type data present in the target text matrix as image data in the coordinate graph to obtain the subject graph.

Optionally, in a possible embodiment, the first-type data include first-column data and second-column data in the target text matrix; and the second-type data include third-column data, fourth-column data and fifth-column data in the target text matrix.

Optionally, in a possible embodiment, prior to the step of acquiring in a target database a target text matrix corresponding to an input text, the method further comprises:

acquiring all keywords in all of the to-be-matched texts;
acquiring the word vectors associated with each of the keywords according to a term frequency inverse document frequency at which each of the keywords appears in each of the to-be-matched texts;
constructing the subject graph corresponding to each of the to-be-matched texts according to the respective word vectors associated with all of the keywords included in each of the to-be-matched texts, so that all the word vectors associated with all of the keywords and all the subject graphs corresponding to the to-be-matched texts together constitute the target database.

Optionally, in a possible embodiment, the step of acquiring all keywords in all of the to-be-matched texts comprises:

acquiring a term frequency inverse document frequency for each word in each of the to-be-matched texts;
calculating an importance score for each of the words according to the term frequency inverse document frequency associated with each of the words in each of the to-be-matched texts,
determining all of the words having the importance score equal to or higher than a predetermined score threshold as the keywords.

Optionally, in a possible embodiment, the importance score is calculated using the following formula:

$$E_{w,p} = -IDF_{w,p}^3 \cdot \sum_d TF_{w,p,d} \cdot \log(TF_{w,p,d})$$

$$E_w = \log\left(\sum_p W_p \cdot E_{w,p}\right)$$

wherein $p$ represents a position of the word w in the text $d$, $TF_{w,p,d}$ represents a term frequency of the word w in the text $d$, $IDF_{w,p}$ represents an inverse document frequency of the word $w$, $E_{w,p}$ represents an intermediate parameter, $W_p$ represents a coefficient of impact of the word at the position $p$, and $E_w$ represents an importance score.

Optionally, in a possible embodiment, the step of constructing the subject graph corresponding to each of the to-be-matched texts according to the respective word vectors associated with all of the keywords included in each of the to-be-matched texts comprises:

constructing a first text matrix corresponding to a first to-be-matched text according to the respective word vectors associated with all the keywords included in the first to-be-matched text; wherein the first to-be-matched text is one of the plurality of the to-be-matched texts;
constructing the subject graph corresponding to the first to-be-matched text according to the first text matrix.

Optionally, in a possible embodiment, the step of constructing a first text matrix corresponding to a first to-be-matched text according to the respective word vectors associated with all the keywords included in the first to-be-matched texts comprises:

deploying the respective word vectors associated with all the keywords included in the first to-be-matched text on rows of the first text matrix as row elements to construct a first initial text matrix corresponding to the first to-be-matched text;
processing the first initial text matrix with Latent Dirichlet Allocation algorithm to obtain a first intermediate text matrix having a predefined dimension;

processing the first intermediate text matrix with t-distributed Stochastic Neighbor Embedding (t-SNE) algorithm to obtain the first text matrix.

Optionally, in a possible embodiment, after the step of constructing the subject graph corresponding to the first to-be-matched text according to the first text matrix, the method further comprises:
filtering the subject graph corresponding to the first to-be-matched text using a Gauss filter to update the subject graph corresponding to the first to-be-matched text.

Optionally, in a possible embodiment, prior to the step of acquiring all keywords in all of the to-be-matched texts, the method further comprises:

pre-processing each of the to-be-matched texts to rule out preset characters in each of the to-be-matched texts; and the step of acquiring all keywords in all of the to-be-matched texts comprises: acquiring all the keywords in each of the pre-processed to-be-matched text.

Optionally, in a possible embodiment, the step of pre-processing each of the to-be-matched texts to rule out preset characters in each of the to-be-matched texts comprises: pre-processing each of the to-be-matched texts based on preset filtering characters to rule out the filtering characters in each of the to-be-matched texts.

Another embodiment of the invention provides a text search device comprising:

a processing module configured to acquire in a target database a target text matrix corresponding to an input text; wherein the target database comprises a plurality of word vectors associated with each word, and the target text matrix is formed by a plurality of target word vectors associated with the input text in the target database;
the processing module further being configured to construct a target subject graph corresponding to the input text according to the target text matrix; and
the processing module further being configured to determine in the target database a plurality of initially matching texts corresponding to the input text and a subject graph corresponding to each of the initially matching texts; wherein a plurality of to-be-matched texts and a subject graph corresponding to each of the to-be-matched texts are stored in the target database, and each of the initially matching texts being selected from the plurality of to-be-matched texts; and
a result generation module configured to generate a search result of the input text according to the target subject graph and the subject graph corresponding to each of the initially matching texts.

A further embodiment of the invention provides a server comprising:

a storage device configured to store one or more programs; and
a processor;
wherein the processor is configured to execute the one or more programs to implement the text search method mentioned above.

A yet embodiment of the invention provides a computer-readable storage medium on which one or more computer programs are stored, wherein the one or more computer programs are executed by a processor to implement the text search method mentioned above.

**Brief Description of the Drawings**

Fig. 1 shows a schematic diagram of an application scenario of a text search method provided in an embodiment of the invention;

Fig. 2 shows a schematic structural block diagram of a server provided in an embodiment of the invention;

Fig. 3 shows a schematic flowchart of a text search method provided in an embodiment of the invention;

Fig. 4 shows a schematic flowchart of sub-steps of step 211 in Fig. 3;

Fig. 5 shows a schematic flowchart of sub-steps of step 215 in Fig. 3;

Fig. 6A shows a schematic diagram of a coordinate graph;

Fig. 6B shows a schematic diagram of a subject graph;

Fig. 7 shows a schematic flow chart of sub-steps of step 215-1 in Fig. 5.

Fig. 8A shows a schematic diagram of Latent Dirichlet Allocation dimensionality reduction;

Fig. 8B shows a schematic diagram of t-SNE conversion;

Fig. 9 shows another schematic flow chart of a text search method provided in an embodiment of the invention;

Fig. 10 shows a further schematic flow chart of a text search method provided in an embodiment of the invention;

Fig. 11 shows a schematic flow chart of substeps of step 237 in Fig. 10;

Fig. 12 shows a schematic flow chart of substeps of step 235 in Fig. 10;

Fig. 13 shows a schematic structural block diagram of a text search device provided in an embodiment of the invention.

In the figures, 100 - server, 101 - storage device, 102 - processor, 103 - communication interface, 300 - text search device, 301 - processing module, and 302 - result generation module.

## Detailed Description of the Invention

To clarify the objects, technical solutions and merits of the embodiments of the invention, the technical solutions in the embodiments of the invention will be clearly and completely described below in conjunction with the drawings of the embodiments of the invention. Obviously, the invention is not limited to the embodiments described herein which only constitute some of its embodiments. In general, components that make up the embodiments of the invention described and shown in the drawings may be arranged and devised in different configurations and forms.

Therefore, the detailed description of the embodiments of the invention provided in the drawings are not intended to limit the scope of the invention claimed, but just illustrate the selected embodiments of the invention. All other embodiments envisioned by a person skilled in the art based on the embodiments of the invention without creative inputs fall into the protection scope of the invention.

It should be noted that like reference numbers and letters in the drawings are designated to like parts, therefore once a part is defined in a figure of the drawings, it will not be defined and explained in the subsequent figures of the drawings. In addition, the terms "first", "second", and the like herein are only used to distinguish one element from another, but do not denote expressly or implicitly any importance.

It should be appreciated that the relative terms such as first, second, and the like are only used to distinguish an entity or operation from another entity or operation, but do not necessarily require or imply any relation or order among such entities or operations. In addition, the terms "comprise", "include" or any other variation thereof are intended to cover a non-exclusive inclusion, such that a process, method, article, or apparatus that comprises a list of elements is not necessarily limited to those elements but may include other elements not expressly listed or inherent to such process, method, article, or apparatus. Without more limitations, an element defined by the phrase "comprising one..." does not rule out that other same elements also exist in the process, method, article or apparatus comprising such element.

For the aforementioned score calculation-based text search solutions known in the prior art, when a user inputs a search target such as an article or a text, some of them would normally calculate a weight of each of the input words in the search target on the basis of a term frequency-inverse document frequency (TF-IDF) of the word according to the frequency at which said word appears in the search target input to generate vectors for the search target, and to compare the vectors associated with the search target to the respective vectors associated with other texts in the database so as to identify the text associated with the vectors having the smallest difference as the target text corresponding to the search target. For example, a dot product of the vectors corresponding to the search target and the vectors associated with each text in the database is calculated to yield a difference score for each text, so as to identify the text having the smallest difference score as the target text.

However, the aforementioned search solutions are based on the comparison between a keyword or a word in a text input by a user and words stored in texts saved in the database without searching for words which are literally different but semantically similar. For instance, if the user searches for "image processing", the above search solutions would concern the words "image processing" contained in the text, without considering to search similar words such as "computer vision" which are literally different but having similar meanings, leading to lower search accuracy.

Thus, based on the above defect, a possible implementation provided by the embodiments of the invention is: acquiring in a target database a target text matrix formed from word vectors associated with input texts by preconfiguring a target database including a plurality of word vectors, a plurality of to-be-matched texts and a subject graph corresponding to each to-be-matched text; then constructing a target subject graph corresponding to the input text with the target text matrix, acquiring from the target database a plurality of initially matching texts corresponding to the input text and a subject graph corresponding to each of the initially matching texts, generating a search result of the input text according to the target subject graph and the subject graph corresponding to each of the initially matching texts, so that the to-be-matched texts that have similar meanings to the input text are searched for in order to increase text search accuracy.

Several embodiments of the invention will be exemplarily described in conjunction with the drawings. The following embodiments and the features of the embodiments can be combined with each other in the case that they do not conflict.

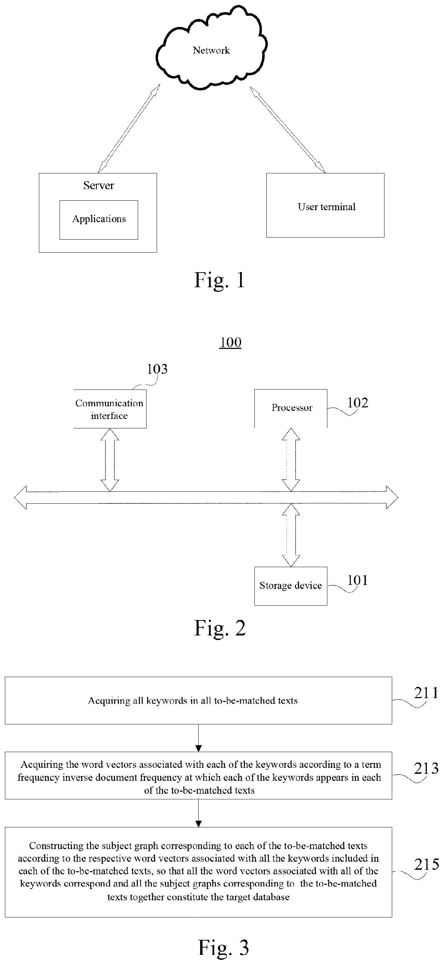

With reference to Fig. 1, it shows a schematic view of an application scenario of a text search method provided in an embodiment of the invention. In this embodiment, a server can be located together with a user terminal in a wireless network or a wired network, and exchanges data with the user terminal through the wireless network or the wired network.

In this embodiment, a user terminal can be a mobile terminal device, which can be a smartphone, a personal computer, a tablet computer, a wearable mobile terminal, etc.

The text search method provided by this embodiment of the invention can be applied to a server as shown in Fig. 1. The server is installed with applications to correspond with the user terminal and is configured to provide services for users. The embodiment of the invention provides a text search method that can be implemented by an application installed in the server.

With reference to Fig. 2, it shows a schematic structural block diagram of a server 100 provided in an embodiment of the invention. The server 100 comprises a storage device 101, a processor 102 and a communication interface 103. The storage device 101, the processor 102 and the communication interface 103 are electrically connected with each other directly or indirectly to achieve data transfer or exchange. For example, the electrical connection of these elements can be achieved with one or more communication mains or signal lines.

The storage device 101 can be configured to store software programs and modules, such as program instructions / modules corresponding to a text search device 300 provided by this embodiment of the invention. The processor 102 performs different functional applications and data processing by executing software programs and modules stored in the storage device 101 to implement the text search method provided by this embodiment of the invention. The communication interface 103 can be configured to perform signaling or data communication with other nodes.

In this embodiment, the storage device 101 can be but without limited to a random access memory (RAM), a read only memory (ROM), a programmable read-only memory PROM), an erasable programmable read-only memory (EPROM), an electric erasable programmable read-only memory (EEPROM), etc.

The processor 102 can be an integrated circuit chip having signal processing capacity. This processor 102 can be a general-purpose processor, including a central processing unit (CPU), a network processor (NP), etc., and can also be a digital signal processor (DSP), an application specific integrated circuit (ASIC), a field-programmable gate array (FPGA) or some other programmable logic device, a discrete gate or a transistor logic device, a discrete hardware component, etc.

It can be understood that the structure in Fig. 2 is only schematically shown, the server 100 can further comprise more or fewer components than those shown in Fig. 2, or can have a configuration different that shown in Fig. 2. Each component shown in Fig. 2 can be realized by hardware, software or their combination.

The text search method provided by this embodiment of the invention is exemplarily illustrated below with the server 100 shown in Fig. 2 used as a schematic execution body.

In this embodiment, it has to be explained that the text search method provided by this embodiment of the invention can comprise content of two stages, one of which is the construction of a target database required in a text search and the other of which is the search for a search result of the text input by a user in the target database generated.

First, in the stage of constructing a target database, with reference to Fig. 3, it shows a schematic flowchart of a text search method provided in an embodiment of the invention. The flowchart can comprise the following steps:

Step 211, acquiring all keywords in all to-be-matched texts;
Step 213, acquiring the word vectors associated with each of the keywords according to a term frequency inverse document frequency at which each of the keywords appears in each of the to-be-matched texts;
Step 215, constructing the subject graph corresponding to each of the to-be-matched texts according to the respective word vectors associated with all the keywords included in each of the to-be-matched texts, so that all the word vectors associated with all of the keywords correspond and all the subject graphs corresponding to the to-be-matched texts together constitute the target database.

In this embodiment of the invention, in the process of constructing a target data base, the server can pre-store a plurality of to-be-matched texts in the database with methods such as network search method.

The server can then extract all keywords in all of the to-be-matched texts with methods such as word segmentation or character segmentation method.

Subsequently, based on the term frequency inverse document frequency of each of the keywords in each of the to-be-matched texts, the server can acquire the word vectors associated with each of the keywords, and can store the word vectors in the target database.

For instance, if the term frequency inverse document frequencies of a keyword in each of the to-be-matched texts are $n_1, n_2, ..., n_i$, then the word vectors associated with that keyword can be shown as $(n_1, n_2, ..., n_i)$.

It can be understood that with regards to any keyword, not all to-be-matched texts contain that keyword. Therefore, when that keyword does not exist in one of the to-be-matched texts, the term frequency inverse document frequency of that keyword in that to-be-matched text can take the value "0".

In addition, after acquiring the respective word vectors associated with all of the keywords, the server can construct a subject graph corresponding to each of the to-be-matched texts in the manner of for example creating coordinate axes and indicating each of the keywords on the coordinate axes according to the word vectors associated with each of the keywords and all keywords included in each of the to-be-matched texts, so as to visualize each of the to-be-matched texts.

Accordingly, the server can construct the target database with both the acquired word vectors associated with each of the keywords and the subject graph corresponding to each of the to-be-matched texts.

In this embodiment, it has to be explained that when all keywords in all to-be-matched texts are acquired, the results of the aforementioned character segmentation method can be adopted to treat all words included in each of the to-be-matched texts as keywords.

Of course, it can be understood that, the importance of each word in a to-be-matched text is different; thus in a possible type of implementation, this embodiment of the invention can also extract keywords in each of the to-be-matched texts based on the importance of each word in the to-be-matched texts.

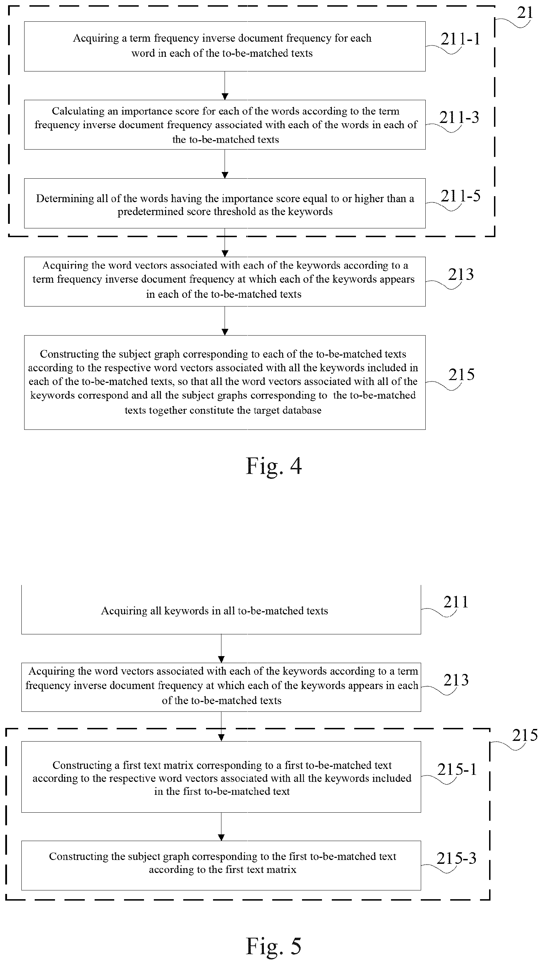

As an example, based on Fig. 3, with reference to Fig. 4, it shows a schematic flowchart of substeps of step 211 in Fig. 3. Step 211 can comprise the following substeps:

Step 211-1, acquiring a term frequency inverse document frequency for each word in each of the to-be-matched texts;
Step 211-3, calculating an importance score for each of the words according to the term frequency inverse document frequency associated with each of the words in each of the to-be-matched texts;
Step 211-5, determining all of the words having the importance score equal to or higher than a predetermined score threshold as the keywords.

In this embodiment of the invention, when evaluating the importance of each of the words in to-be-matched texts, the server can first acquire the term frequency inverse document frequency for each of the words in each of the to-be-matched texts.

It has to be explained that the term frequency inverse document frequency for each of the words mentioned in Step 211-1 can refer to the term frequency inverse document frequency for each of the words in all to-be-matched texts. If a word does not exist in one of the to-be-matched texts, the term frequency inverse document frequency in that to-be-matched text can take "0" as the default value.

In addition, the algorithm of the term frequency inverse document frequency in this embodiment of the invention is the same as that of the prior art. For the sake of convenience and simplicity, it will not be repeated here.

Afterward, the server can rate the individual importance of each of the words according to the term frequency inverse document frequency of each word in each of the to-be-matched texts, so as to acquire an importance score corresponding to each of the words.

Lastly, the server can according to the evaluation criterion of importance using a predetermined score threshold determine all of the words having the importance score equal to or higher than the predetermined score threshold as the keywords, so as to filter out words with lower importance in the texts to prevent the processing capacity from lowering due to the redundancy of data size.

It has to be explained that in some possible application scenarios, the same words appearing at different locations in a text can have different importance for the text.

For example, a US patent document normally consists of four parts: title, abstract, claims and description. The importance of a word appearing in the title, the abstract, the claims and the description normally decreases in sequence.

Therefore, when Step 211-3 is executed, the importance score is calculated using the following formula:

$$E_{w,p} = -IDF_{w,p}^3 \cdot \sum_{d} TF_{w,p,d} \cdot \log(TF_{w,p,d})$$

$$E_w = \log\left(\sum_{p} W_p \cdot E_{w,p}\right)$$

$p$ represents a position of the word w in the text $d$, $TF_{w,p,d}$ represents a term frequency of the word w in the text $d$, $IDF_{w,p}$ represents an inverse document frequency of the word $w$, $E_{w,p}$ represents an intermediate parameter, $W_p$ represents a coefficient of impact of the word at the position $p$, and $E_w$ represents an importance score.

It has to be explained that the above is just an example listing a formula that can calculate the importance score of each of the words. In other possible implementations of this embodiment of the invention, some other formulae can also be used to acquire the importance score of each of the words. The embodiment of the invention does not limit the formula calculating the importance score of each of the words.

In addition, in the case of the server executing Step 215 of constructing each of the to-be-matched texts, in a possible implementation, based on Fig. 3, with reference to Fig. 5, it shows a schematic flowchart of substeps of step 215 in Fig. 3. Step 215 can comprise the following substeps:

Step 215-1, constructing a first text matrix corresponding to a first to-be-matched text according to the respective word vectors associated with all the keywords included in the first to-be-matched text;
Step 215-3, constructing the subject graph corresponding to the first to-be-matched text according to the first text matrix.

In this embodiment of the invention, the server can first construct a first text matrix corresponding to a first to-be-matched text according to the respective word vectors associated with all the keywords included in the first to-be-matched text.

For example, if a first to-be-matched text comprises keywords of an amount of M and each keyword corresponds to the N-dimensional word vectors, then a first text matrix having dimensions of M rows and N columns. The first text matrix of M rows and N columns can be acquired by using vectors associated with keywords of an amount of M in sequence as row elements of the first text matrix.

The server can then construct a subject graph corresponding to the first to-be-matched text according to data included in the first text matrix.

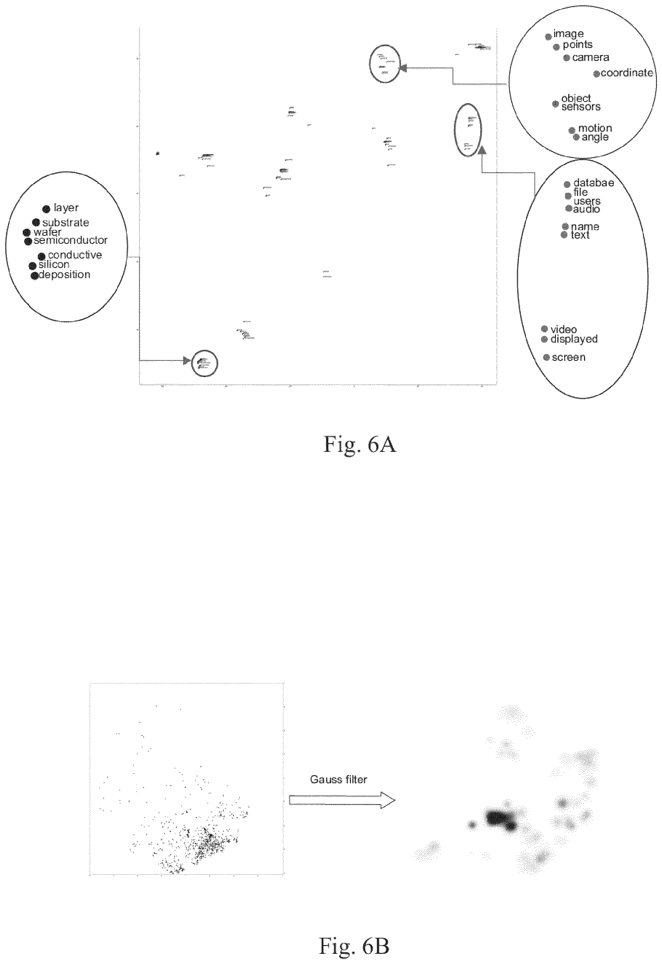

For example, in the case of a two-dimensional subject graph, the server can construct a coordinate graph as shown in Fig. 6A with the first-column data and the second-column data present in the first text matrix as coordinate data, so as to indicate each keyword in the first to-be-matched text on coordinate axes. The server can then use the third-column data, the fourth-column data and the fifth-column data present in the first text matrix as image data, so as to label image data of coordinates of each keyword on the coordinate axes and further construct a subject graph as shown in Fig. 6B corresponding to the first text matrix.

Wherein it has to be explained that as schematically shown in the subject graph in Fig. 6B, in some possible implementations of this embodiment of the invention, the subject graph can be further processed in combination with a Gauss filter so as to enlarge image data in the subject graph.

In addition, the above is just an example in which the first-column data and the second-column data present in the first text matrix are used as coordinate data and the third-column data, the fourth-column data and the fifth-column data present in the first text matrix are used as image data. In some possible implementations of this embodiment of the invention, the server can also select data of other columns to construct a subject graph corresponding to the first text matrix. For example, the fourth-column data and the fifth-column data present in the first text matrix can also be used as coordinate data and the first-column data and the second-column data and the third-column data present in the first text matrix as image data to construct a subject graph. This embodiment of the invention does not limit the method of selecting data for constructing a subject graph. For example, according to the rules provided, the data of two columns present in the first text matrix can be selected as coordinate data and the data of another three columns present in the first text matrix as image data to construct a subject graph.

Moreover, as shown in the above example, since the word vectors associated with each keyword consist of the term frequency inverse document frequencies of each of the to-be-matched texts. As shown in the above example, the term frequency inverse document frequencies of a certain keyword in each of the to-be-matched texts are respectively $n_1, n_2, ..., n_i$, then the word vectors corresponding to that keyword can be shown as $(n_1, n_2, ..., n_i)$.

In general, when the server constructs a target database, it pre-stores a large quantity of texts, say 1000 texts. In other words, the word vectors associated with each keyword may comprise 1000 elements, and thus the dimensions of the first text matrix constructed would be larger. For example, if the first to-be-matched text comprises 100 keywords, then the dimensions of the first text matrix are 100 rows by 1000 columns, leading to a larger data size calculated by the server, more noise information included and sparser data, as a result of which not all information of the keywords can be reflected when a subject graph is constructed.

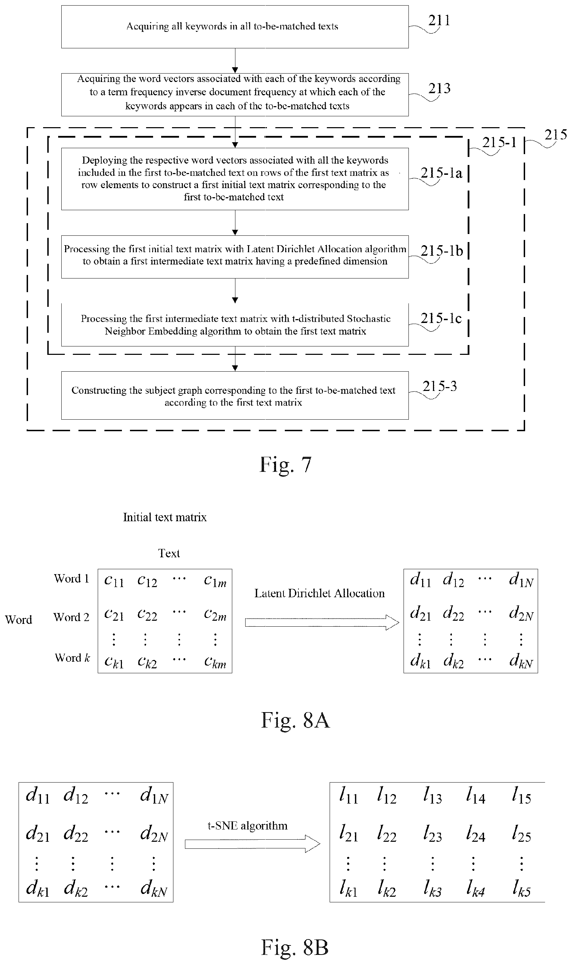

Thus, in a possible implementation, with reference to Fig. 7, it shows a schematic flowchart of substeps of step 215-1 in Fig. 5. Step 215-1 can comprise the following sub steps:

Step 215-1a, deploying the respective word vectors associated with all the keywords included in the first to-be-matched text on rows of the first text matrix as row elements to construct a first initial text matrix corresponding to the first to-be-matched text;

Step 215-1b, processing the first initial text matrix with Latent Dirichlet Allocation algorithm to obtain a first intermediate text matrix having a predefined dimension; Step 215-1c, processing the first intermediate text matrix with t-distributed Stochastic Neighbor Embedding algorithm to obtain the first text matrix.

When constructing the first text vector, the server can first according to the above example deploy the respective word vectors associated with all keywords included in the first to-be-matched text as a row element to construct a first initial text matrix corresponding to the first to-be-matched text. For example, if the first to-be-matched text comprises 100 keywords and each keyword is a word vector of 1000 dimensions, then the dimensions of the first initial text matrix constructed are 100 rows by 1000 columns, wherein each element in the first initial text matrix represents a term frequency inverse document frequency of a corresponding word in a corresponding text. For instance, $c_{ij}$ represents the term frequency inverse document frequency of the $i^{th}$ keyword in the $j^{th}$ text.

Afterward, the server can adopt for example the conversion method shown in Fig. 8A to use the Latent Dirichlet Allocation (LDA) algorithm to reduce the dimensions of the first initial text matrix, so as to decrease the dimensions of the first initial text matrix to obtain a first intermediate text matrix. For instance, the dimensions of the above first initial text matrix that is 100 rows by 1000 columns are reduced to become a first intermediate text matrix that is 100 rows by 10 columns to increase the processing speed.

Lastly, the server can adopt for example the conversion method shown in Fig. 8B to use the t-distributed Stochastic Neighbor Embedding (t-SNE) algorithm to process the first intermediate text matrix, so as to reduce noise information included in the first intermediate text matrix and further reduce the dimensions of the first intermediate text matrix to obtain the first text matrix. For instance, the dimensions of the above first intermediate text matrix that is 100 rows by 10 columns are reduced to become a first text matrix that is 100 rows by 5 columns.

It has to be explained that the above is just an example explaining that when the server uses the LDA algorithm to reduce the dimensions, the dimensions of the first initial text can be reduced to a first intermediate text matrix of 10 rows and the dimensions of the first intermediate text can be reduced to a first text matrix of 5 rows. In some other implementations of this embodiment of the invention, actual situations or a user's configuration can be used in combination with the embodiment to reduce the dimensions of the first intermediate text matrix to predefined dimensions and to convert the dimensions of the first text matrix to predefined dimensions. This embodiment of the invention does not limit the actual dimensions of the first intermediate text matrix and the first text matrix.

In addition, in some possible application situations, some words contribute less to the meaning of a text, such as punctuation marks, numbers or some common words (is, of, in), etc.

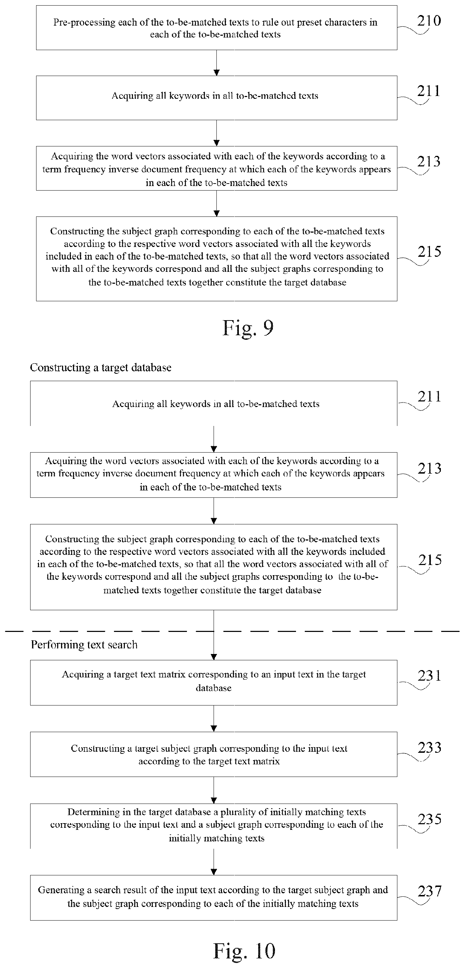

Thus, based on Fig. 3, with reference to Fig. 9, it shows another schematic flowchart of a text search method provided by an embodiment of the invention. In a possible implementation, that text search method can further comprise the following substep prior to the execution of Step 211:

Step 210, pre-processing each of the to-be-matched texts to rule out preset characters in each of the to-be-matched texts.

In this embodiment of the invention, the server can set some filtering characters, such as the aforementioned punctuation marks, numbers or some specific words, for some specific application situations, so as to pre-process each of the to-be-matched texts prior to the execution of Step 211 to rule out for example the aforementioned preset characters in each of the to-be-matched texts, so that in the execution of Step 211, all keywords in each of the pre-processed to-be-matched texts are acquired, the effect of heavy-detailed distribution brought by low-meaning characters is then filtered out and the keywords that really have similar meanings are highlighted.

After constructing a target database with the above solution, the server can immediately use the target database to provide a user with the text search service.

Thus, based on the above target database constructed, an example of stages of performing a text search with the target database is described below.

Based on Fig. 3, with reference to Fig. 10, it shows another schematic flowchart of a text search method provided by an embodiment of the invention. The text search method can comprise the following steps:

Step 231, acquiring a target text matrix corresponding to an input text in the target database;

Step 233, constructing a target subject graph corresponding to the input text according to the target text matrix;

Step 235, determining in the target database a plurality of initially matching texts corresponding to the input text and a subject graph corresponding to each of the initially matching texts;

Step 237, generating a search result of the input text according to the target subject graph and the subject graph corresponding to each of the initially matching texts.

The target database constructed with the aforementioned solution provided by the embodiment of the invention comprises word vectors (i.e. word vectors associated with the aforementioned each keyword) associated with a plurality of words and records a plurality of to-be-matched texts as well as a subject graph corresponding to each of the to-be-matched texts.

Thus, when performing a text search, the server can first search in the target database word vectors associated with the input text according to the target database so as to obtain the target word vectors, i.e. to confirm the word vectors in the input text corresponding to all keywords recorded in the target database as target word vectors, so as to deploy the target word vectors to form a target text matrix.

For example, if the input text is "牛顿三大定律包括哪些" (meaning "What are the Newton's three laws of motion?" in English), and each of the Chinese words "牛", "顿", "三", "大", "定" and "律" has corresponding word vectors in the target database, then the respective corresponding word vectors of "牛", "顿", "三", "大", "定" and "律" can be used as column elements to construct a target text matrix comprising six row elements.

Afterward, based on the target text matrix acquired, the server can adopt for example the manner of the aforementioned Step 215-3 to construct a target subject graph corresponding to the input text.

Subsequently, based on a plurality of the to-be-matched texts recorded in the target database and the subject graph corresponding to each of the to-be-matched texts, the server can confirm a plurality of the initially matching texts corresponding to the input text and a subject graph corresponding to each of the initially matching texts according to all keywords existing in the target database that the input text comprises; wherein each of the initially matching texts is one of the plurality of the to-be-matched texts that are stored in the target database.

For instance, taking the above input text "牛顿三大定律包括哪些" as an example, according to the example, the input text comprises six words existing in the target database in total, "牛", "顿", "三", "大", "定" and "律". The server can compare the input text with all to-be-matched texts included in the target database one by one to confirm the number of the six keywords, "牛", "顿", "三", "大", "定" and "律", in each of the to-be-matched texts; and to sequence the to-be-matched texts according to the number of keywords each of the to-be-matched texts comprises, so as to treat the to-be-matched texts of an amount of K at the front of the sequence as initially matching texts, or to treat all to-be-matched texts comprising at least a predefined number of keywords (for example at least two keywords) as initially matching texts.

It has to be explained that the above is just illustration providing some possible implementations for acquiring initially matching texts. In some other possible implementations for this embodiment of the invention, some other manners can be adopted to acquire initially matching texts, such as confirming the initially matching texts by means of dot product calculating a scalar. This embodiment of the invention does not limit the manner of acquiring initially matching texts.

Lastly, the server can combine a target subject graph corresponding to an input text with a subject graph corresponding to each of the initially matching texts to generate a search result of that input text by means of image matching. Therefore, in a text search, to-be-matched texts whose meanings are similar to the input text are searched for by means of a target subject graph corresponding to an input text, and therefore text search accuracy is increased.

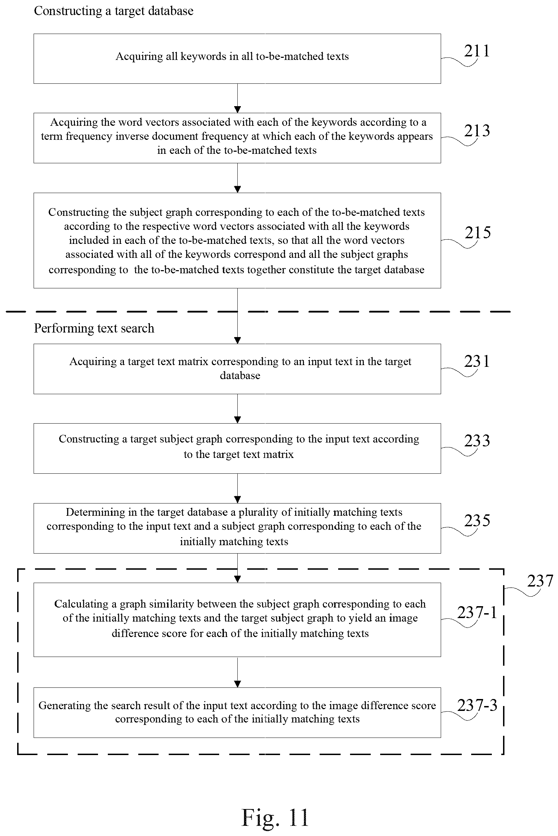

Wherein, in a possible implementation for achieving Step 237, with reference to Fig. 11, it shows a schematic flowchart of substeps of Step 237 in Fig. 10. Step 237 can comprise the following substeps:

Step 237-1, calculating a graph similarity between the subject graph corresponding to each of the initially matching texts and the target subject graph to yield an image difference score for each of the initially matching texts;

Step 237-3, generating the search result of the input text according to the image difference score corresponding to each of the initially matching texts.

In this embodiment of the invention, when generating a search result of the input text, the server can calculate the graph similarity between a subject graph corresponding to each of the initially matching texts and the target subject graph by means of wide metric, Euclidean distance, cosine distance, earth mover's distance, etc. For instance, an image difference score corresponding to each of the initially matching texts can be obtained by scaling an individual graph similarity of a subject graph corresponding to each of the initially matching texts with the target subject graph according to certain parameters.

Afterward, according to the image difference score corresponding to each of the initially matching texts, the server can generate a search result of the input text by sequencing according to image difference scores or treating an initially matching text with the smallest difference characterized by the image difference score as the final matched text.

Of course, it can be understood that the above is just illustration, citing examples to describe some manners of generating a search result. In some other possible implementations for this embodiment of the invention, some other manners can be adopted to generate a search result. For example, it is also possible to set the number of to-be-matched texts as the search result in proportion to the image difference score. This embodiment of the invention does not limit the manner of generating a search result.

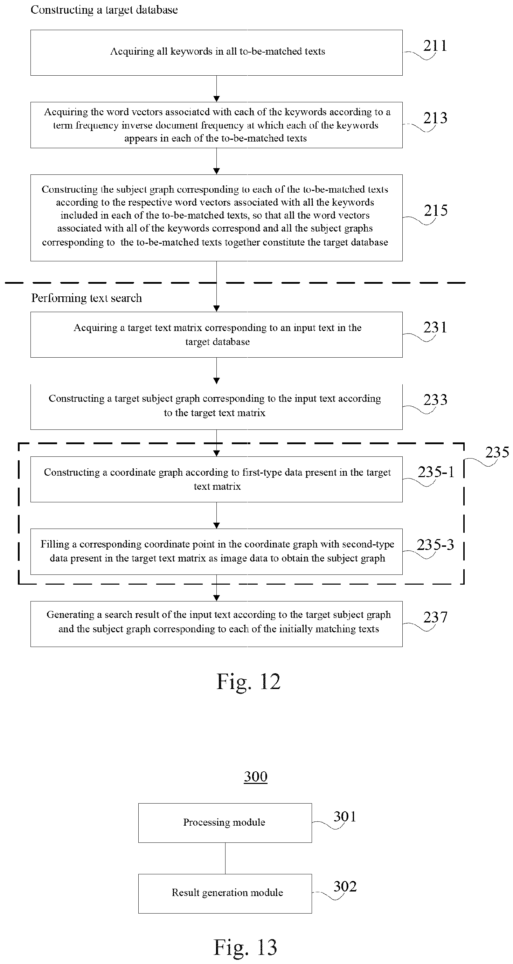

Moreover, Step 235 is illustrated with reference to Fig. 12. Fig. 12 shows a schematic flowchart of substeps of Step 235 in Fig. 10. Step 235 can comprise the following sub steps:

Step 235-1, constructing a coordinate graph according to first-type data present in the target text matrix;

Step 235-3, filling a corresponding coordinate point in the coordinate graph with second-type data present in the target text matrix as image data to obtain the subject graph.

In this embodiment of the invention, with the 5-column text matrix in the aforementioned illustration as an example, according to the manner in the aforementioned Step 215-3, the server can treat the first-column data and the second-column data present in the target text matrix as the first-type data to construct a coordinate graph as shown in Fig. 6A. The server can then treat the third-column data, the fourth-column data and the fifth-column data present in the target text matrix as the second-type data so as to fill a corresponding coordinate point in the coordinate graph with the second-type data present in the target text matrix as image data to obtain a subject graph as shown in Fig. 6B. For instance, a corresponding coordinate point in the coordinate graph can be filled with the second-type data as RGB data or YUV data to obtain a subject graph as shown in Fig. 6B.

It has to be explained that as shown in Fig. 10, the text search solution provided by this embodiment of the invention can comprise two stages: constructing a target data base and performing a text search. In some possible implementations of the embodiment of the invention, steps of constructing a target database and performing a text search can be achieved in the same physical device. For instance, the two stages are both achieved in the server as shown in Fig. 1. In some other possible implementations of the embodiment of the invention, steps of constructing a target database and performing a text search can also be achieved in different physical devices. For instance, a service system can be formed by a terminal device and a server. The terminal device generates and updates a target database, and the target database generated is subsequently transferred to the server. The server receives an input text from a user and provides the users with text search service according to the target database.

In addition, based on the same inventive idea as the aforementioned text search method, with reference to Fig. 13, it shows a schematic structural block diagram of a text search device 300 provided in an embodiment of the invention. The text search device 300 can comprise a processing module 301 and a result generation module 302. In the text search device 300:

the processing module 301 can be configured to acquire in a target database a target text matrix corresponding to an input text; wherein the target database comprises a plurality of word vectors associated with each word, and the target text matrix is formed by a plurality of target word vectors associated with the input text in the target database;

the processing module 301 can further be configured to construct a target subject graph corresponding to the input text according to the target text matrix; and

the processing module 301 can further be configured to determine in the target database a plurality of initially matching texts corresponding to the input text and a subject graph corresponding to each of the initially matching texts; wherein a plurality of to-be-matched texts and a subject graph corresponding to each of the to-be-matched texts are stored in the target database, and each of the initially matching texts being selected from the plurality of the to-be-matched texts; and

the result generation module 302 can be configured to generate a search result of the input text according to the target subject graph and the subject graph corresponding to each of the initially matching texts.

Optionally, in a possible implementation, in the case that the result generation module 302 generates a search result of the input text according to the target subject graph and the subject graph corresponding to each of the initially matching texts, it can be configured to:

calculate a graph similarity between the subject graph corresponding to each of the initially matching texts and the target subject graph to yield an image difference score for each of the initially matching texts;
generate the search result of the input text according to the image difference score corresponding to each of the initially matching texts.

Optionally, in a possible implementation, in the case that the processing module 301 constructs a target subject graph corresponding to the input text according to the target text matrix, it can be configured to:

construct a coordinate graph according to the first-type data present in the target text matrix;
filling a corresponding coordinate point in the coordinate graph with the second-type data present in the target text matrix as image data to obtain the subject graph.

Optionally, in a possible implementation, the first-type data include first-column data and second-column data in the target text matrix; and the second-type data include third-column data, fourth-column data and fifth-column data in the target text matrix.

Optionally, in a possible implementation, prior to acquiring the target text matrix corresponding to the input text in the target database, the processing module 301 can further be configured to:

acquire all keywords in all of the to-be-matched texts;
acquire the word vectors associated with each of the keywords according to a term frequency inverse document frequency at which each of the keywords appears in each of the to-be-matched texts;
construct the subject graph corresponding to each of the to-be-matched texts according to the respective word vectors associated with all of the keywords included in each of the to-be-matched texts, so that all the word vectors associated with all of the keywords and all the subject graphs corresponding to all of the to-be-matched texts together constitute the target database.

Optionally, in a possible implementation, when acquiring all keywords in all of the to-be-matched texts, the processing module 301 can be configured to:

acquire a term frequency inverse document frequency for each word in each of the to-be-matched texts;
calculate an importance score for each of the words according to the term frequency inverse document frequency associated with each of the words in each of the to-be-matched texts;
determining all of the words having the importance score equal to or higher than a predetermined score threshold as the keywords.

Optionally, in a possible implementation, the importance score is calculated using the following formula:

$$E_{w,p} = -IDF_{w,p}^3 \cdot \sum_d TF_{w,p,d} \cdot \log(TF_{w,p,d})$$

$$E_w = \log\left(\sum_p W_p \cdot E_{w,p}\right)$$

$p$ represents a position of the word w in the text $d$, $TF_{w,p,d}$ represents a term frequency of the word w in the text $d$, $IDF_{w,p}$ represents an inverse document frequency of the word $w$, $E_{w,p}$ represents an intermediate parameter, $W_p$ represents a coefficient of impact of the word at the position $p$, and $E_w$ represents an importance score.

Optionally, in a possible implementation, when constructing the subject graph corresponding to each of the to-be-matched texts according to the respective word vectors associated with all of the keywords included in each of the to-be-matched texts, the processing module 301 can be configured to:

construct a first text matrix corresponding to a first to-be-matched text according to the respective word vectors associated with all the keywords included in the first to-be-matched text; wherein the first to-be-matched text is one of the plurality of the to-be-matched texts;
construct the subject graph corresponding to the first to-be-matched text according to the first text matrix.

Optionally, in a possible implementation, when constructing a first text matrix corresponding to the first to-be-matched text according to the respective word vectors associated with all the keywords included in the first to-be-matched text, the processing module 301 can be configured to:

deploy the respective word vectors associated with all the keywords included in the first to-be-matched text on rows of the first text matrix as row elements to construct a first initial text matrix corresponding to the first to-be-matched text;
process the first initial text matrix with Latent Dirichlet Allocation algorithm to obtain a first intermediate text matrix having a predefined dimension;
process the first intermediate text matrix with t-distributed Stochastic Neighbor Embedding algorithm to obtain the first text matrix.

Optionally, in a possible implementation, after constructing the subject graph corresponding to the first to-be-matched text according to the first text matrix, the processing module 301 can further be configured to:
filter the subject graph corresponding to the first to-be-matched text using a Gauss filter to update the subject graph corresponding to the first to-be-matched text.

Optionally, in a possible implementation, prior to acquiring all keywords in all of the to-be-matched texts, the processing module 301 can further be configured to: pre-process each of the to-be-matched texts to rule out preset characters in each of the to-be-matched texts.

When acquiring all keywords in all of the to-be-matched texts, the processing module 301 can be configured to: acquire all the keywords in each of the pre-processed to-be-matched texts.

Optionally, in a possible implementation, when pre-processing each of the to-be-matched texts to rule out preset characters in each of the to-be-matched texts, the processing module 301 can be configured to:
pre-process each of the to-be-matched texts based on preset filtering characters to rule out the filtering characters in each of the to-be-matched texts.

It should be understood that in all embodiments provided by the invention, the device and method disclosed can also be realized in other manners. The aforementioned embodiments of the device are solely illustrative. For instance, the flowcharts and block diagrams in the drawings show the system structure, functions and operations that the device and the method can realize according to the embodiments of the invention. In this respect, each block in a flowchart or a block diagram can represent a module, a program segment or a part of codes. The module, the program segment or the part of codes comprises one or more executable instructions configured to realize prescribed logic functions.

It should also be noted that, in some implementations serving as replacement, the function indicated in a block can also occur in a sequence different from the one indicated in a drawing. For instance, two consecutive blocks can actually be executed simultaneously, and sometimes they can also be executed in the reverse sequence, depending on the function involved.

It should also be noted that each block in a block diagram and/or a flowchart, and the combination of blocks in a block diagram and/or a flowchart can be realized with a hardware-based system dedicated to the execution of prescribed functions or actions, or with a combination of dedicated hardware and computer instructions.

In addition, in the embodiments of the invention, each functional module can be assembled together to form an independent part; each functional module can also exist independently; two or more functional modules can also be assembled to form an independent part.

If the functions are realized in the form of software functional module and are sold or used as a separate product, they can be stored in a computer-readable storage medium. Based on this understanding, the technical solution per se, or the contribution to the existing technology or part of the technical solution of the invention can be realized in the form of software product. This computer software product is stored in a storage medium and comprises several instructions to make a computer device (which can be a personal computer, a server, or a network device) execute all or some of the steps of the methods mentioned in the embodiments of the invention. The aforementioned storage medium includes different types of medium that can store program codes such as a USB flash drive, a portable hard drive, a read only memory, a random access memory, a disk or a CD-ROM.

In summary, a text search method, a device, a server and a storage medium provided by the embodiments of the invention acquire a target text matrix formed by a plurality of word vectors associated with an input text according to a target database by preconfiguring a target database including a plurality of word vectors, a plurality of to-be-matched texts and a subject graph corresponding to each of the to-be-matched texts; then use that target text matrix to construct a target subject graph corresponding to the input text; acquire in the target database a plurality of the initially matching texts corresponding to the input text and a subject graph corresponding to each of the initially matching texts; then generate a search result of the input text according to the target subject graph and the subject graph corresponding to each of the initially matching texts. In comparison with some other implementations, to-be-matched texts whose meanings are similar to the input text are searched for by means of a target subject graph corresponding to the input text, and therefore text search accuracy is increased.

## EP 4 064 071 A1

The above description provides some exemplary embodiments of the invention, and is not intended to limit the invention. For any person skilled in the art, this invention can undergo various variations and modifications may be conducted. Any alterations, equivalent changes and modifications made to the foregoing embodiments without departing from the spirit and principle of the invention should fall within the protection scope of the invention.

To those skilled in the art, it is apparent that the invention is not limited to the details of the above-described exemplary embodiments, but may be realized in other specific forms without departing from the spirit or essential characteristics of the invention. Therefore, no matter from what point of view, the embodiments should be considered exemplary and non-restrictive. The scope of the invention is defined by the appended claims rather than by the foregoing description. Thus, all changes which are within the equivalent meanings and scope of the elements of the claims are covered by the invention. The reference numerals in the claims of the invention shall not be constructed as limiting the claims.

**Industrial Applicability**

A target database comprising a plurality of word vectors, a plurality of to-be-matched texts and a subject graph corresponding to each of the to-be-matched texts is preset. That target text matrix is then used to construct a target subject graph corresponding to the input text. After a plurality of the initially matching texts corresponding to the input text and a subject graph corresponding to each of the initially matching texts are acquired in the target database, a search result of the input text is generated according to the target subject graph and the subject graph corresponding to each of the initially matching texts. In comparison with some other implementations, to-be-matched texts whose meanings are similar to the input text are searched for by means of a target subject graph corresponding to the input text, and therefore text search accuracy is increased.

**Claims**

1. A text search method, comprising:

   acquiring in a target database a target text matrix corresponding to an input text;
   wherein the target database comprises a plurality of word vectors associated with each word, and the target text matrix is formed by a plurality of target word vectors corresponding to the input text in the target database;
   constructing a target subject graph corresponding to the input text according to the target text matrix;
   determining in the target database a plurality of initially matching texts corresponding to the input text and a subject graph corresponding to each of the initially matching texts; wherein a plurality of to-be-matched texts and a subject graph corresponding to each of the to-be-matched texts are stored in the target database, and each of the initially matching texts being selected from the plurality of to-be-matched texts;
   generating a search result of the input text according to the target subject graph and the subject graph corresponding to each of the initially matching texts.

2. The method according to claim 1, wherein the step of generating a search result of the input text according to the target subject graph and the subject graph corresponding to each of the initially matching texts comprises:

   calculating a graph similarity between the subject graph corresponding to each of the initially matching texts and the target subject graph to yield an image difference score for each of the initially matching texts;
   generating the search result of the input text according to the image difference score corresponding to each of the initially matching texts.

3. The method according to claim 1 or 2, wherein the step of constructing a target subject graph corresponding to the input text according to the target text matrix comprises:

   constructing a coordinate graph according to first-type data present in the target text matrix;
   filling a corresponding coordinate point in the coordinate graph with second-type data present in the target text matrix as image data to obtain the subject graph.

4. The method according to claim 3, wherein the first-type data include first-column data and second-column data in the target text matrix; and the second-type data include third-column data, fourth-column data and fifth-column data in the target text matrix.

14

5. The method according to any of claims 1 to 4, wherein prior to the step of acquiring in a target database a target text matrix corresponding to an input text, the method further comprises:

acquiring all keywords in all of the to-be-matched texts;
acquiring the word vectors associated with each of the keywords according to a term frequency inverse document frequency at which each of the keywords appears in each of the to-be-matched texts;
constructing the subject graph corresponding to each of the to-be-matched texts according to the respective word vectors associated with all of the keywords included in each of the to-be-matched texts, so that all the word vectors associated with all of the keywords and all the subject graphs corresponding to the to-be-matched texts together constitute the target database.

6. The method according to claim 5, wherein the step of acquiring all keywords in all of the to-be-matched texts comprises:

acquiring a term frequency inverse document frequency for each word in each of the to-be-matched texts;
calculating an importance score for each of the words according to the term frequency inverse document frequency associated with each of the words in each of the to-be-matched texts,
determining all of the words having the importance score equal to or higher than a predetermined score threshold as the keywords.

7. The method according to claim 6, wherein the importance score is calculated using the following formula:

$$E_{w,p} = -IDF_{w,p}^3 \cdot \sum_d TF_{w,p,d} \cdot \log(TF_{w,p,d})$$

$$E_w = \log\left(\sum_p W_p \cdot E_{w,p}\right)$$

wherein $p$ represents a position of the word w in the text $d$, $TF_{w,p,d}$ represents a term frequency of the word w in the text $d$, $IDF_{w,p}$ represents an inverse document frequency of the word $w$, $E_{w,p}$ represents an intermediate parameter, $W_p$ represents a coefficient of impact of the word at the position $p$, and $E_w$ represents an importance score.

8. The method according to any of claims 5 to 7, wherein the step of constructing the subject graph corresponding to each of the to-be-matched texts according to the respective word vectors associated with all of the keywords included in each of the to-be-matched texts comprises:

constructing a first text matrix corresponding to a first to-be-matched text according to the respective word vectors associated with all the keywords included in the first to-be-matched text; wherein the first to-be-matched text is one of the plurality of the to-be-matched texts;
constructing the subject graph corresponding to the first to-be-matched text according to the first text matrix.

9. The method according to claim 8, wherein the step of constructing a first text matrix corresponding to a first to-be-matched text according to the respective word vectors associated with all the keywords included in the first to-be-matched text comprises:

deploying the respective word vectors associated with all the keywords included in the first to-be-matched text on rows of the first text matrix as row elements to construct a first initial text matrix corresponding to the first to-be-matched text;
processing the first initial text matrix with Latent Dirichlet Allocation algorithm to obtain a first intermediate text matrix having a predefined dimension;
processing the first intermediate text matrix with t-distributed Stochastic Neighbor Embedding algorithm to obtain the first text matrix.

10. The method according to claim 8 or 9, wherein the step of constructing the subject graph corresponding to the first to-be-matched text according to the first text matrix is followed by:
filtering the subject graph corresponding to the first to-be-matched text using a Gauss filter to update the subject graph corresponding to the first to-be-matched text.

11. The method according to any of claims 5 to 10, wherein the step of acquiring all keywords in all of the to-be-matched texts is preceded by:

   pre-processing each of the to-be-matched texts to rule out preset characters in each of the to-be-matched texts; and
   the step of acquiring all keywords in all of the to-be-matched texts comprises:
   acquiring all the keywords in each of the pre-processed to-be-matched texts.

12. The method according to claim 11, wherein the step of pre-processing each of the to-be-matched texts to rule out preset characters in each of the to-be-matched texts comprises:
   pre-processing each of the to-be-matched texts based on preset filtering characters to rule out the filtering characters in each of the to-be-matched texts.

13. A text search device, comprising:

   a processing module configured to

      acquire in a target database a target text matrix corresponding to an input text; wherein the target database comprises a plurality of word vectors associated with each word, and the target text matrix is formed by a plurality of target word vectors associated with the input text in the target database;
      construct a target subject graph corresponding to the input text according to the target text matrix; and
      determine in the target database a plurality of initially matching texts corresponding to the input text and a subject graph corresponding to each of the initially matching texts ; wherein a plurality of to-be-matched texts and a subject graph corresponding to each of the to-be-matched texts are stored in the target database, and each of the initially matching texts being selected from the plurality of to-be-matched texts; and

   a result generation module configured to generate a search result of the input text according to the target subject graph and the subject graph corresponding to each of the initially matching texts.

14. A server, comprising:

   a storage device configured to store one or more programs; and
   a processor;
   wherein the processor is configured to execute the one or more programs to implement the method according to any of claims 1 to 12.

15. A computer-readable storage medium on which one or more computer programs are stored, wherein the one or more computer programs are executed by a processor to implement the method according to any of claims 1 to 12.

Network

Server

Applications

User terminal

Fig. 1

100

103

Communication
interface

Processor 102

Storage device 101

Fig. 2

Acquiring all keywords in all to-be-matched texts 211

Acquiring the word vectors associated with each of the keywords according to a term
frequency inverse document frequency at which each of the keywords appears in each
of the to-be-matched texts 213

Constructing the subject graph corresponding to each of the to-be-matched texts
according to the respective word vectors associated with all the keywords included in
each of the to-be-matched texts, so that all the word vectors associated with all of the
keywords correspond and all the subject graphs corresponding to  the to-be-matched
texts together constitute the target database 215

Fig. 3

Acquiring a term frequency inverse document frequency for each word in each of the to-be-matched texts   211-1

Calculating an importance score for each of the words according to the term frequency inverse document frequency associated with each of the words in each of the to-be-matched texts   211-3

Determining all of the words having the importance score equal to or higher than a predetermined score threshold as the keywords   211-5

21

Acquiring the word vectors associated with each of the keywords according to a term frequency inverse document frequency at which each of the keywords appears in each of the to-be-matched texts   213

Constructing the subject graph corresponding to each of the to-be-matched texts according to the respective word vectors associated with all the keywords included in each of the to-be-matched texts, so that all the word vectors associated with all of the keywords correspond and all the subject graphs corresponding to the to-be-matched texts together constitute the target database   215

Fig. 4

Acquiring all keywords in all to-be-matched texts   211

Acquiring the word vectors associated with each of the keywords according to a term frequency inverse document frequency at which each of the keywords appears in each of the to-be-matched texts   213

Constructing a first text matrix corresponding to a first to-be-matched text according to the respective word vectors associated with all the keywords included in the first to-be-matched text   215-1

Constructing the subject graph corresponding to the first to-be-matched text according to the first text matrix   215-3

215

Fig. 5

Fig. 6A

Gauss filter

Fig. 6B

Acquiring all keywords in all to-be-matched texts ⟶ 211

Acquiring the word vectors associated with each of the keywords according to a term frequency inverse document frequency at which each of the keywords appears in each of the to-be-matched texts ⟶ 213

215-1 ⟶ 215

Deploying the respective word vectors associated with all the keywords included in the first to-be-matched text on rows of the first text matrix as row elements to construct a first initial text matrix corresponding to the first to-be-matched text ⟶ 215-1a

Processing the first initial text matrix with Latent Dirichlet Allocation algorithm to obtain a first intermediate text matrix having a predefined dimension ⟶ 215-1b

Processing the first intermediate text matrix with t-distributed Stochastic Neighbor Embedding algorithm to obtain the first text matrix ⟶ 215-1c

Constructing the subject graph corresponding to the first to-be-matched text according to the first text matrix ⟶ 215-3

Fig. 7

Initial text matrix

Text

Word

Word 1 $\begin{matrix} c_{11} & c_{12} & \cdots & c_{1m} \end{matrix}$

Word 2 $\begin{matrix} c_{21} & c_{22} & \cdots & c_{2m} \end{matrix}$

$\begin{matrix} \vdots & \vdots & \vdots & \vdots \end{matrix}$

Word $k$ $\begin{matrix} c_{k1} & c_{k2} & \cdots & c_{km} \end{matrix}$

Latent Dirichlet Allocation ⟹

$\begin{matrix} d_{11} & d_{12} & \cdots & d_{1N} \\ d_{21} & d_{22} & \cdots & d_{2N} \\ \vdots & \vdots & \vdots & \vdots \\ d_{k1} & d_{k2} & \cdots & d_{kN} \end{matrix}$

Fig. 8A

$\begin{matrix} d_{11} & d_{12} & \cdots & d_{1N} \\ d_{21} & d_{22} & \cdots & d_{2N} \\ \vdots & \vdots & \vdots & \vdots \\ d_{k1} & d_{k2} & \cdots & d_{kN} \end{matrix}$

t-SNE algorithm ⟹

$\begin{matrix} l_{11} & l_{12} & l_{13} & l_{14} & l_{15} \\ l_{21} & l_{22} & l_{23} & l_{24} & l_{25} \\ \vdots & \vdots & \vdots & \vdots & \vdots \\ l_{k1} & l_{k2} & l_{k3} & l_{k4} & l_{k5} \end{matrix}$

Fig. 8B

Pre-processing each of the to-be-matched texts to rule out preset characters in each of the to-be-matched texts — 210

↓

Acquiring all keywords in all to-be-matched texts — 211

↓

Acquiring the word vectors associated with each of the keywords according to a term frequency inverse document frequency at which each of the keywords appears in each of the to-be-matched texts — 213

↓

Constructing the subject graph corresponding to each of the to-be-matched texts according to the respective word vectors associated with all the keywords included in each of the to-be-matched texts, so that all the word vectors associated with all of the keywords correspond and all the subject graphs corresponding to the to-be-matched texts together constitute the target database — 215

Fig. 9

Constructing a target database

Acquiring all keywords in all to-be-matched texts — 211

↓

Acquiring the word vectors associated with each of the keywords according to a term frequency inverse document frequency at which each of the keywords appears in each of the to-be-matched texts — 213

↓

Constructing the subject graph corresponding to each of the to-be-matched texts according to the respective word vectors associated with all the keywords included in each of the to-be-matched texts, so that all the word vectors associated with all of the keywords correspond and all the subject graphs corresponding to the to-be-matched texts together constitute the target database — 215

- - - - - - - - - - - - - - - - - - - - - - - - -

Performing text search

Acquiring a target text matrix corresponding to an input text in the target database — 231

↓

Constructing a target subject graph corresponding to the input text according to the target text matrix — 233

↓

Determining in the target database a plurality of initially matching texts corresponding to the input text and a subject graph corresponding to each of the initially matching texts — 235

↓

Generating a search result of the input text according to the target subject graph and the subject graph corresponding to each of the initially matching texts — 237

Fig. 10

Constructing a target database

| Acquiring all keywords in all to-be-matched texts | 211 |

| Acquiring the word vectors associated with each of the keywords according to a term frequency inverse document frequency at which each of the keywords appears in each of the to-be-matched texts | 213 |

| Constructing the subject graph corresponding to each of the to-be-matched texts according to the respective word vectors associated with all the keywords included in each of the to-be-matched texts, so that all the word vectors associated with all of the keywords correspond and all the subject graphs corresponding to the to-be-matched texts together constitute the target database | 215 |

Performing text search

| Acquiring a target text matrix corresponding to an input text in the target database | 231 |

| Constructing a target subject graph corresponding to the input text according to the target text matrix | 233 |

| Determining in the target database a plurality of initially matching texts corresponding to the input text and a subject graph corresponding to each of the initially matching texts | 235 |

237

| Calculating a graph similarity between the subject graph corresponding to each of the initially matching texts and the target subject graph to yield an image difference score for each of the initially matching texts | 237-1 |

| Generating the search result of the input text according to the image difference score corresponding to each of the initially matching texts | 237-3 |

Fig. 11

Constructing a target database

Acquiring all keywords in all to-be-matched texts      211

Acquiring the word vectors associated with each of the keywords according to a term frequency inverse document frequency at which each of the keywords appears in each of the to-be-matched texts      213

Constructing the subject graph corresponding to each of the to-be-matched texts according to the respective word vectors associated with all the keywords included in each of the to-be-matched texts, so that all the word vectors associated with all of the keywords correspond and all the subject graphs corresponding to the to-be-matched texts together constitute the target database      215

Performing text search

Acquiring a target text matrix corresponding to an input text in the target database      231

Constructing a target subject graph corresponding to the input text according to the target text matrix      233

Constructing a coordinate graph according to first-type data present in the target text matrix      235-1

Filling a corresponding coordinate point in the coordinate graph with second-type data present in the target text matrix as image data to obtain the subject graph      235-3

235

Generating a search result of the input text according to the target subject graph and the subject graph corresponding to each of the initially matching texts      237

Fig. 12

300

Processing module      301

Result generation module      302

Fig. 13

## INTERNATIONAL SEARCH REPORT

| International application No. |
| --- |
| **PCT/CN2020/130195** |

**A. CLASSIFICATION OF SUBJECT MATTER**

G06F 16/33(2019.01)i; G06F 16/36(2019.01)i

According to International Patent Classification (IPC) or to both national classification and IPC

**B. FIELDS SEARCHED**

Minimum documentation searched (classification system followed by classification symbols)

G06F; G06N

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: 主题, 图谱, 向量, 矢量, 矩阵, 字, 词, 相似, 匹配, 关联, 相关, 搜索, topic, map, vector, matrix, character, similar, match, correlation, search

**C. DOCUMENTS CONSIDERED TO BE RELEVANT**

| Category* | Citation of document, with indication, where appropriate, of the relevant passages | Relevant to claim No. |
| --- | --- | --- |
| PX | CN 110928992 A (KUANG, Junwei) 27 March 2020 (2020-03-27) claims 1-12, description paragraphs 54-109 | 1-15 |
| A | CN 107491547 A (BEIJING BAIDU NETCOM SCIENCE AND TECHNOLOGY CO., LTD.) 19 December 2017 (2017-12-19) description paragraphs 38-131 | 1-15 |
| A | CN 107168952 A (BEIJING BAIDU NETCOM SCIENCE AND TECHNOLOGY CO., LTD.) 15 September 2017 (2017-09-15) entire document | 1-15 |
| A | CN 110263140 A (BEIJING BAIDU NETCOM SCIENCE AND TECHNOLOGY CO., LTD.) 20 September 2019 (2019-09-20) entire document | 1-15 |
| A | CN 110008326 A (SUZHOU AISPEECH INFORMATION TECHNOLOGY CO., LTD.) 12 July 2019 (2019-07-12) entire document | 1-15 |
| A | US 2018267957 A1 (ELECTRONICS AND TELECOMMUNICATIONS RESEARCH INSTITUTE) 20 September 2018 (2018-09-20) entire document | 1-15 |

☑ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 January 2021** | **20 February 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/130195** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2013020431 A (NEC CORP. et al.) 31 January 2013 (2013-01-31) entire document | 1-15 |

Form PCT/ISA/210 (second sheet) (January 2015)

INTERNATIONAL SEARCH REPORT
Information on patent family members

International application No.

**PCT/CN2020/130195**

| Patent document cited in search report | | | Publication date (day/month/year) | Patent family member(s) | | | Publication date (day/month/year) |
|---|---|---|---|---|---|---|---|
| CN | 110928992 | A | 27 March 2020 | None | | | |
| CN | 107491547 | A | 19 December 2017 | US | 2019065506 | A1 | 28 February 2019 |
| CN | 107168952 | A | 15 September 2017 | US | 10528667 | B2 | 07 January 2020 |
| | | | | US | 2018329886 | A1 | 15 November 2018 |
| CN | 110263140 | A | 20 September 2019 | None | | | |
| CN | 110008326 | A | 12 July 2019 | None | | | |
| US | 2018267957 | A1 | 20 September 2018 | US | 10691892 | B2 | 23 June 2020 |
| | | | | KR | 102019756 | B1 | 10 September 2019 |
| | | | | KR | 20180104899 | A | 27 September 2018 |
| JP | 2013020431 | A | 31 January 2013 | JP | 5754018 | B2 | 22 July 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911148419